# EUROPÄISCHE PATENTSCHRIFT

(11) **EP 0 857 653 B1**
(45) Veröffentlichungstag und Bekanntmachung des Hinweises auf die Patenterteilung: **10.11.1999**
(21) Anmeldenummer: 97122503.2
(22) Anmeldetag: 19.12.1997
(51) Int. Cl.: B65B 65/00, B65B 51/30, B29C 65/18

(54) **Verpackungsmaschine mit einer Siegelbacke**
Packaging machine with a welding jaw
Machine d'emballage avec une mâchoire de soudage

(30) Priorität: 05.02.1997 DE 19704169
(43) Veröffentlichungstag der Anmeldung: 12.08.1998
(73) Patentinhaber: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- WO-A-96/17773
- US-A- 4 584 459

## Beschreibung

Die Erfindung betrifft eine Verpackungsmaschine nach dem Oberbegriff des Anspruchs 1.

Bewegliche Teile und deren Träger an Verpackungsmaschinen werden im allgemeinen aus Stahl gefertigt. Stahl eignet sich sowohl für beheizte Teile, wie z.B. Schweißaggregate zur Kunststoffverschweißung, als auch für unbeheizte Teile, wie z.B. Falteinrichtungen für Faltschachtein oder deren Träger.

Für eine Nutzung zur Herstellung eines beweglichen Teils oder dessen Träger spricht die Steifigkeit (Elastizitätsmodul: 20·10¹⁰ N/m²) Von Stahl. Infolge seiner relativ hohen Werte für die spezifische Wärmeleitfähigkeit (15 bis 45 W/m·K) und die spezifische Wärmekapazität (0,4 bis 0,5 kJ/kg·K) ist er für Schweißaggregate einsetzbar.

Stahl hat den Nachteil, daß er relativ schwer ist (Dichte: 6,3 bis 8,1 kg/dm³), und somit bei den Verpackungsmaschinen relativ große Massen beschleunigt werden müssen. Dies wirkt sich einerseits bei großvolumigen Teilen und Trägern aus, für die große Antriebskräfte aufgebracht werden müssen. Die großen Trägheitsmomente von Stahl sind auch bei Hochleistungsverpackungsmaschinen, bei denen sehr große Beschleunigungen erfolgen müssen, von Nachteil.

Kunststoffe als Siegelbacken hätten zwar infolge ihrer relativ geringen Dichten geringe Trägheitsmomente, erfüllen aber bzgl. ihrer Steifigkeit nicht die Anforderungen für bewegliche Siegelbacken. Wegen ihrer vergleichsweise geringen Wärmeleitfähigkeit und Wärmekapazität sind sie nicht für zu erwärmende Teile einsetzbar.

Der Erfindung liegt die Aufgabe zu Grunde, Stahl für Siegelbacken einer Verpackungsmaschine durch ein anderes Material ersetzen, wobei das Material eine deutlich geringere Dichte als Stahl haben soll. Die Steifigkeit des Materials soll ausreichend sein. Zudem soll das Material sehr gute Werte für die spezifische Wärmeleitfähigkeit und die spezifische Wärmekapazität haben, um es für zu erwärmende Teile einsetzen zu können, und um somit nur eine einzige Materialbevorratung für zu erwärmende und nicht zu erwärmende Teile zu erreichen.

Gelöst ist die Aufgabe gemäß dem kennzeichnenden Teil des Anspruchs 1. Danach besteht die Siegelbacke aus einer Magnesiumlegierung.

Die Magnesumlegierung ist relativ leicht und somit sind das Massenträgheitsmoment und die Beschleunigungskräfte verringert. Seine Dichte von 1,7 kg/dm³ ist deutlich niedriger als die von Stahl (6,3 bis 8,1 kg/dm³), wodurch auch relativ großvolumige Teile bzw. Träger schnell und mit relativ geringem Aufwand beschleunigt werden können. Dies ist besonders für Hochleistungsverpackungsmaschinen von Vorteil. Durch die Verringerung der Beschleunigungskräfte wird die Antriebsmechanik einfacher und die Verpackungsmaschine kostengünstiger.

Die Steifigkeit der Magnesiumlegierung beträgt 4,4·10¹⁰ N/m² und ist damit für die Belange des Verpackungsmaschinenbaus absolut ausreichend.

Die spezifische Wärmeleitfähigkeit der Magnesiumlegierung ist mit 170 W/m·K deutlich höher als die von Stahl (15 bis 45 W/m·K). Die spezifische Wärmekapazität der Magnesiumlegierung beträgt mit 1 kJ/kg·K deutlich mehr als die von Stahl (0,4 bis 0,5 kJ/kg·K). Dadurch ist die Magnesiumlegierung für zu erwärmende Teile einer Verpackungsmaschine sehr gut verwendbar.

Durch eine Verwendung der Magnesiumlegierung sowohl für zu erwärmende Teile als auch für nicht zu erwärmende Teile bzw. Träger genügt eine einzige Materialbevorratung für Teile und Träger. Zudem ist die Magnesiumlegierung mit einer Brinellhärte (HB) von 200 bis 300 relativ hart.

Vorteilhafte Ausgestaltungen der erfindungsgemäßen Verpackungsmaschine sind in den Ansprüchen 2 bis 11 beschrieben.

Ist die Magnesiumlegierung mit einer Beschichtung versehen, und die Beschichtung ist chemisch inert (Anspruch 2), so ist ein Schutz der Magnesiumlegierung gegenüber chemisch aggressiven Substanzen erreicht. Diese Substanzen könnten zu verpackende Produkte sein.

Ein zuverlässiger Schutz der Magnesiumlegierung ist gegeben, wenn diese eloxiert ist (Anspruch 3).

Von besonderem Vorteil ist die Magnesiumlegierung für eine Quersiegelbacke einer vertikalen oder horizontalen Schlauchbeutelmaschine und deren Träger (Anspruch 4, Anspruch 15). Die Quersiegelbacke ist mittels des Trägers gegen einen quer zu verschweißenden Folienschlauch bewegbar. Die dabei notwendigen Beschleunigungskräfte sind durch den Einsatz der Magnesiumlegierung deutlich verringert. Wegen seiner hohen Wärmeleitfähigkeit und Wärmekapazität ist die Magnesiumlegierung für die heiß betriebene Quersiegelbacke von Vorteil. Die Quersiegelbacke zeigt keine signifikanten Temperaturunterschiede entlang ihrer Siegelfläche und Wärmeableitungen werden schnell ausgeglichen.

Das gleiche gilt für eine gegen einen längs zu verschweißenden Folienschlauch bewegbare Längssiegelbacke (Anspruch 5).

Eine Quersiegelbacke kann zudem länger ausgestaltet sein und trotzdem mit einer verringerten Antriebsmechanik und kleinerem Antrieb versehen sein.

Die Trägheitskräfte bei der Bewegung der Quersiegelbacken sind weiter verringert, wenn analog Anspruch 6 auch ein in einer Quersiegelbacke befindliches, einer Durchtrennung des Folienschlauches dienendes Stechmesser aus einer Magnesiumlegierung besteht.

Für heiß werdende Teile der Verpackungsmaschinen, wie die Quersiegelbacke, die Längssiegelbacke oder das Stechmesser eignet sich insbesondere Mg Ag3 Se2 Zr1 als Magnesiumlegierung (Anspruch 7). Diese Legierung enthält 3% Silber, 2% Selen und 1% Zirkonium und wird auch als MSR-Legierung bezeichnet. Sie ist hitzebeständig bis ca.300 Grad Celsius und hat ansonsten die typischen Eigenschaften einer Magnesiumlegierung.

Die 9% Aluminium und 1% Zink enthaltende Magnesiumlegierung Mg Al9 Zn1 eignet sich sowohl für bewegte Teile als auch deren Träger (Anspruch 8), erfüllt sehr gut alle eingangs beschriebenen Eigenschaften einer Magnesiumlegierung und ist gut verfügbar.

Die Herstellung der Magnesiumlegierung erfolgt in kostengünstiger Weise als Gußteil (Anspruch 9).

Das relativ geringe Trägheitsmoment einer Magnesiumlegierung ist besonders günstig für die Verwendung bei schnell bewegten Teilen bzw. deren Träger, wie z.B. bei zwei rotierenden Backensystemen, die gegenläufig gegeneinander beweglich sind, und wobei jedes Backensystem mindestens eine Quersiegelbacke und einen Träger aufweist (Anspruch 10). Durch die kontinuierliche Bewegung der Quersiegelbacken können besonders hohe Verpackungsgeschwindigkeiten erzielt werden.

Im folgenden wird die Erfindung an Hand Ausführungsbeispiele darstellender Figuren näher beschrieben. Es zeigt:

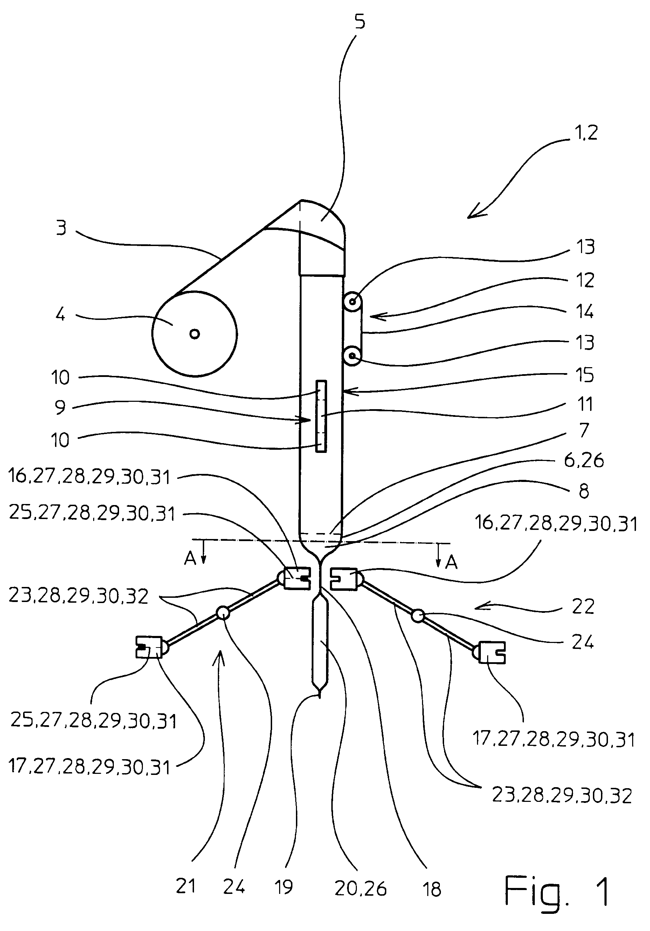

- Figur 1: in einer Seitenansicht und in einer prinzipiellen Darstellung eine vertikale Schlauchbeutelmaschine, mit einer von einer Vorratsrolle abgewickelten Folienbahn, einer Formschulter zum Umformen der ebenen Folienbahn um ein Füllrohr zu einem Folienschlauch, einer Folientransporteinrichtung zum Weitertransport der Folienbahn und des Folienschlauches, einer Längssiegeleinrichtung, und gegeneinander bewegliche, um Achsen rotierende Quersiegelbacken;
- Figur 2: in einer Draufsicht mit teilweisem Horizontalschnitt entlang A-A der Figur 1 das untere Ende des Folienschlauches und einen Ausschnitt der rotierenden Backensysteme;
- Figur 3: in einer Seitendarstellung und in einem Ausschnitt eine gegen einen Folienschlauch bewegliche Längssiegelbacke, sowie

Bei einer als vertikale Schlauchbeutelmaschine 1 ausgestalteten Verpackungsmaschine 2 wird eine Folienbahn 3 von einer Vorratsrolle 4 abgewickelt und an einer Formschulter 5 zu einem Folienschlauch 6 umgeformt (Figu 1). Der Folienschlauch 6 umhüllt ein Füllrohr 7, durch das eine Befüllung des unteren Endes 8 des Folienschlauches 6 erfolgt. Die Folienbahn 3 und der Folienschlauch 6 werden mittels einer gegen den Folienschlauch 6 wirkenden Folientransporteinrichtung 9 kontinuierlich weiterbewegt. Die Folientransporteinrichtung 9 weist zwei auf gegenüberliegenden Seiten des Folienschlauches 6 gelegene, um jeweils zwei Rollen 10 umlaufende Abzugsriemen 11 auf.

Eine Längssiegeleinrichtung 12 hat ein um zwei Räder 13 umlaufendes Siegelband 14, womit der Folienschlauch 6 unter Erzeugung einer Längssiegelnaht 15 kontinuierlich längs verschweißt wird.

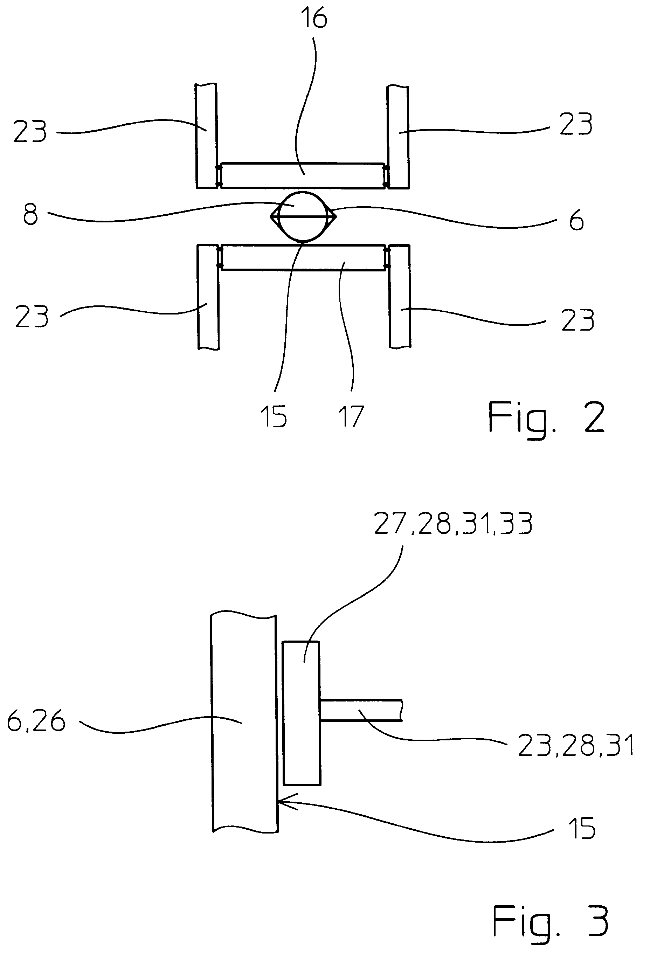

Eine Querverschweißung des Folienschlauches 6 geschieht nach einem Füllvorgang mittels Quersiegelbacken 16, 17, wobei eine Kopfnaht 18 und eine Bodennaht 19 eines Schlauchbeutels 20 erzeugt werden. Es sind zwei rotierende Backensysteme 21, 22 vorgesehen. Jedes Backensystem 21, 22 weist zwei Quersiegelbacken 16, 17 und jeweils einen Träger 23 pro Quersiegelbacke 16, 17 auf (Figur 2). Träger 23 und Quersiegelbacken 16, 17 sind um Achsen 24 rotierbar.

In den Quersiegelbacken 16, 17 des einen Backensystems 21 ist jeweils ein Stechmesser 25 zur Abtrennung eines Folienschlauches 20 vom Folienschlauch 6 vorgesehen.

Der Folienschlauch 6 dient als Verpackung 26. Gegen die Verpackung 26 sind die Quersiegelbacken 16, 17 und die Stechmesser 25 als bewegliche Teile 27 bewegbar.

Die Quersiegelbacken 16, 17 sind aus einer Magnesiumlegierung 28 gefertigt, ebenso die Träger 23 der Quersiegelbacken 16, 17 und die Stechmesser 25. Die Magnesiumlegierung 28 ist eloxiert und somit von einer chemisch inerten Beschichtung 29 umgeben.

Die beweglichen Teile 27 und die Träger 23 sind Gußteile 30. Während die heißen Teile 27 aus Mg Ag3 Se2 Zr1 31 als Magnesiumlegierung 28 sind, wurde für die Träger 23 Mg Al9) Zn1 32 gewählt.

Beide Magnesiumlegierungen 28 haben eine im Vergleich zu Stahl deutlich niedrigere Dichte, und weisen somit deutlich geringere Gewichtskräfte und Massenträgsheitsmomente auf. Die Teile 27 und die Träger 23 können somit mit verringertem technischen Aufwand bewegt werden. Die Teile 27 und die Träger 23 weisen eine ausreichende Steifigkeit für ihren Zweck auf. Die Teile 27 sind für den Verpackungsvorgang ausreichend hitzebeständig und haben sowohl eine hohe Wärmeleitfähigkeit als auch eine hohe Wärmekapazität, was zu einer gut reproduzierbaren, sicheren und schnellen Verschweißung der Kopfnähte 18 und Bodennähte 19 führt. Die Materialien 31, 32 könnten auch gegeneinander ausgetauscht werden.

Bei einem weiteren Ausführungsbeispiel (Figur 3) ist das bewegliche Teil 27 eine Längssiegelbacke 33, die zur Erzeugung einer Längssiegelnaht 15 mittels eines Trägers 23 gegen einen längs zu verschweißenden Folienschlauch 6 bewegbar ist. Die Längssiegelbacke 33 und der Träger 23 bestehen aus der Magnesiumlegierung 28 Mg Ag3 Se2 Zr1 31 und sind nicht zusätzlich beschichtet.

## Patentansprüche

1. Verpackungsmaschine mit einer beweglichen, gegen eine Verpackung beweglicher Siegelbacke (16, 17, 33) und einem mit der Siegelbacke (16, 17, 33) beweglichen und mit der Siegelbacke (16, 17, 33) verbundenem Träger (23), dadurch gekennzeichnet, daß die Siegelbacke (16, 17, 33) aus einer Magnesiumlegierung (28) besteht.

2. Verpackungsmaschine nach Anspruch 1, dadurch gekennzeichnet, daß die Siegelbacke eine Quersiegelbacke (16, 17) einer vertikalen Schlauchbeutelmaschine (1) ist, die mittels eines Trägers (23) gegen einen quer zu verschweißenden Folienschlauch (6) bewegbar ist.

3. Verpackungsmaschine nach Anspruch 1, dadurch gekennzeichnet, daß die Siegelbacke eine Längssiegelbacke (33) einer vertikalen Schlauchbeutelmaschine (1) ist, die zur Erzeugung einer Längssiegelnaht (15) mittels eines Trägers (23) gegen einen längs zu verschweißenden Folienschlauch (6) bewegbar ist.

4. Verpackungsmaschine nach Anspruch 2, dadurch gekennzeichnet, daß zwei rotierende Backensysteme (21, 22) vorgesehen sind, die gegenläufig gegeneinander beweglich sind, und daß jedes Backensystem (21, 22) mindestens eine Quersiegelbacke (16, 17) und einen Träger (23) aufweist.

5. Verpackungsmaschine nach Anspruch 1, dadurch gekennzeichnet, daß die Verpackungsmaschine eine horizontale Schlauchbeutelmaschine ist.

6. Verpackungsmaschine nach Anspruch 1, dadurch gekennzeichnet, daß die Siegelbacken (16, 17, 33) aus der Magnesiumlegierung (28) Mg Ag 3 Se 2 Zr 1 (31) besteht.

7. Verpackungsmaschine nach Anspruch 1, dadurch gekennzeichnet, daß als Magnesiumlegierung (28) für die Siegelbacke (16, 17, 33) Mg Al 9 Zn 1 (32) vorgesehen ist.

8. Verpackungsmaschine nach Anspruch 1, dadurch gekennzeichnet, daß die Siegelbacke (16, 17, 33) ein Gußteil (30) ist.

9. Verpackungsmaschine nach Anspruch 2, dadurch gekennzeichnet, daß die Quersiegelbacke (16, 17) ein aus einer Magnesiumlegierung (28) bestehendes Stechmesser (25) enthält.

10. Verpackungsmaschine nach Anspruch 1, dadurch gekennzeichnet, daß die Magnesiumlegierung (28) mit einer Beschichtung (30) versehen ist, und die Beschichtung (30) chemisch inert ist.

11. Verpackungsmaschine nach Anspruch 10, dadurch gekennzeichnet, daß die Magnesiumlegierung (28) eloxiert ist.

## Claims

1. A packaging machine with a movable sealing jaw (16, 17, 33) movable towards a package and a carrier (23) movable with the sealing jaw (16, 17, 33) and connected to the sealing jaw (16, 17, 33), **characterized in that** the sealing jaw (16, 17, 33) consists of a magnesium alloy (28).

2. A packaging machine according to Claim 1, **characterized in that** the sealing jaw is a transverse sealing jaw (16, 17) of a vertical tubular-bag machine (1), which is movable by means of a carrier (23) towards a film tube (6) to be welded transversely.

3. A packaging machine according to Claim 1, **characterized in that** the sealing jaw is a longitudinal sealing jaw (33) of a vertical tubular-bag machine (1), which, in order to produce a longitudinal sealing seam (15), is movable by means of a carrier (23) towards a film tube (6) to be welded longitudinally.

4. A packaging machine according to Claim 2, **characterized in that** two rotating jaw systems (21, 22) are provided which are movable in opposite directions towards each other, and each jaw system (21, 22) is provided with at least one transverse sealing jaw (16, 17) and one carrier (23).

5. A packaging machine according to Claim 1, **characterized in that** the packaging machine is a horizontal tubular-bag machine.

6. A packaging machine according to Claim 1, **characterized in that** the sealing jaws (16, 17, 33) consist of the magnesium alloy (28) Mg Ag 3 Se 2 Zr 1 (31).

7. A packaging machine according to Claim 1, **characterized in that** Mg Al 9 Zn 1 (32) is provided as the magnesium alloy (28) for the sealing jaw (16, 17, 33).

8. A packaging machine according to Claim 1, **characterized in that** the sealing jaw (16, 17, 33) is a cast part (30).

9. A packaging machine according to Claim 2, **characterized in that** the transverse sealing jaw (16, 17) contains a punching knife (25) consisting of a magnesium alloy.

10. A packaging machine according to Claim 1, **characterized in that** the magnesium alloy (28) is provided with a coating (30), and the coating (30) is chemically inert.

11. A packaging machine according to Claim 10, **characterized in that** the magnesium alloy (28) is anodized.

## Revendications

1. Machine à emballer comportant une mâchoire de scellement (16, 17, 33) déplaçable par rapport à un emballage ainsi qu'un support (23) déplaçable avec la mâchoire de scellement (16, 17, 33) et relié à la mâchoire de scellement (16, 17, 33), caractérisée en ce que la mâchoire de scellement (16, 17, 33) est constitué en un alliage de magnésium (28).

2. Machine à emballer selon la revendication 1, caractérisée en ce que la mâchoire de scellement est une mâchoire de scellement transversale (16, 17) d'une tubeuse verticale (1) qui est déplaçable, au moyen d'un support (23), par rapport à un tube en feuille (6) à souder transversalement.

3. Machine à emballer selon la revendication 1, caractérisée en ce que la mâchoire de scellement est une mâchoire de scellement longitudinale (33) d'une tubeuse verticale (1) qui est déplaçable, au moyen d'un support (23), par rapport à un tube en feuille (6) à souder longitudinalement, pour produire un joint de scellement longitudinal (15).

4. Machine à emballer selon la revendication 2, caractérisée en ce que sont prévus deux systèmes à mâchoires (21, 22) tournants, qui sont déplaçables en sens contraire l'un par rapport à l'autre et en ce que chaque système à mâchoires (21, 22) comporte au moins une mâchoire de scellement transversal (16, 17) et un support (23).

5. Machine à emballer selon la revendication 1, caractérisée en ce que la machine à emballer est une tubeuse horizontale.

6. Machine à emballer selon la revendication 1, caractérisée en ce que les mâchoires de scellement (16, 17, 33) sont consitutées en un alliage de magnésium (28) MgAg₃Se₂Zr₁.(31).

7. Machine à emballer selon la revendication 1, caractérisée en ce qu'on prévoit comme alliage de magnésium (28) pour la mâchoire de scellement (16, 17, 33) Mg Al 9 Zn 1 (32).

8. Machine à emballer selon la revendication 1, caractérisée en ce que la mâchoire de scellement (16, 17, 33) est un élément en fonte (30).

9. Machine à emballer selon la revendication 2, caractérisée en ce que la mâchoire de scellement transversal (16, 17) contient une lame à perforer (25) constituée en un alliage de magnésium (28).

10. Machine à emballer selon la revendication 1, caractérisée en ce que l'alliage de magnésium (28) est pourvu d'un revêtement (30) et le revêtement (30) est inerte chimiquement.

11. Machine à emballer selon la revendication 10, caractérisée en ce que l'alliage de magnésium (28) est anodisé.
